# EUROPEAN PATENT SPECIFICATION

(11) **EP 4 527 743 B1**
(45) Date of publication and mention of the grant of the patent: **18.11.2026**
(21) Application number: 24202525.2
(22) Date of filing: 25.09.2024
(51) Int. Cl.: B64D 29/06, E05C 1/06

(54) **NACELLE PIN LATCH ASSEMBLY**
GONDELSTIFTVERRIEGELUNGSANORDNUNG
ENSEMBLE DE VERROUILLAGE DE BROCHE DE NACELLE

(30) Priority: 25.09.2023 US 202318372474
(43) Date of publication of application: 26.03.2025
(73) Proprietor: Rohr, Inc., Chula Vista, CA 91910-2098 (US)
(72) Inventor: McMAHAN, Paul F., College Station, 77840 (US); PHILLIPS, Braskel, San Diego, 92154 (US)
(74) Representative: Dehns

(56) References cited:
- EP-A1- 2 431 555
- US-A1- 2012 235 425
- US-A1- 2013 140 832
- US-A1- 2019 218 837

## Description

### BACKGROUND OF THE INVENTION

### 1. Technical Field

The present disclosure relates to nacelle latch assemblies in general, and to nacelle latch assemblies that include a latch pin in particular.

### 2. Background Information

Modern aircraft propulsion systems typically include a gas turbine engine and a nacelle housing providing an aerodynamic covering for the gas turbine engine. The nacelle may include one or more cowls for covering components of the gas turbine engine. These cowls may be pivotally mounted to a stationary structure enabling those cowls to be opened for providing access to the components underneath. The cowls may be secured in a closed position using one or more latch assemblies. Various types of latch assemblies are known in the art. While these known latch assemblies have various benefits, they are typically difficult to open easily and very often utilize complex mechanical structures that are prone to damage. Accordingly, a latch assembly that overcomes the shortcomings of existing latch assemblies is desired.

US 2019/218837 A1 discloses a prior art pin latch with adjustable pre-load.

### SUMMARY

According to an aspect of the present invention, a latch assembly is provided according to claim 1.

Features of embodiments of the invention are set forth in the dependent claims. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 diagrammatically illustrates a conventional fixed wing aircraft that may utilize embodiments of the present disclosure.
FIG. 2 is a diagrammatic perspective view of a present disclosure latch assembly embodiment shown in a handle closed configuration.
FIG. 3 is a diagrammatic perspective view of a present disclosure latch assembly embodiment shown in a handle open configuration.
FIG. 4 is a diagrammatic perspective partial view of a present disclosure latch assembly embodiment shown in a handle closed configuration.
FIG. 5 is a diagrammatic planar view of a drive link embodiment.
FIG. 6 is a diagrammatic partial view of a present disclosure latch assembly, showing a handle biasing element embodiment.
FIG. 7A is a diagrammatic perspective view of a present disclosure latch assembly embodiment shown in a handle closed configuration.
FIGS. 7B-7D are diagrammatic perspective views of a present disclosure latch assembly embodiment shown in handle open configurations, with the handle shown in different rotational positions.

### DETAILED DESCRIPTION

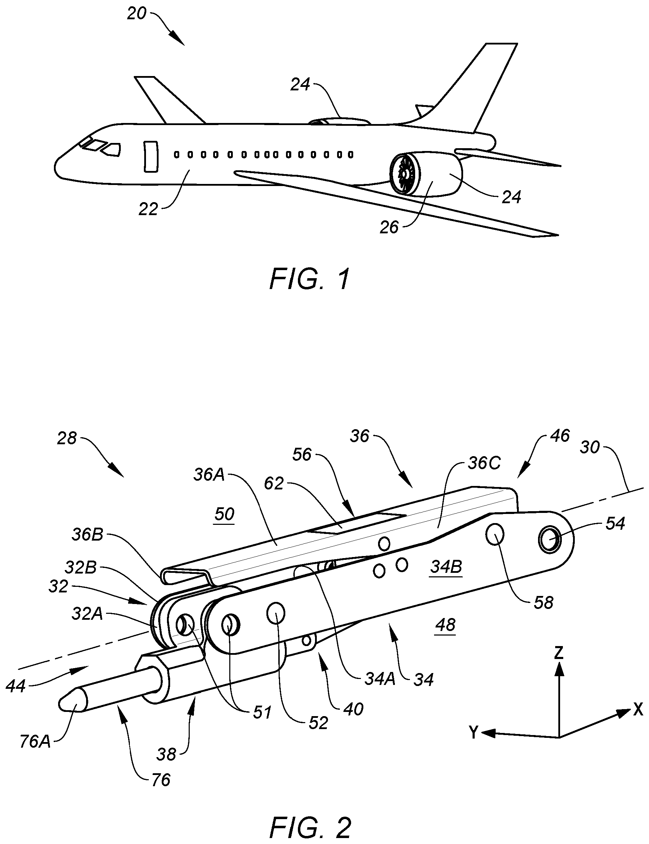

FIG. 1 illustrates a conventional fixed wing aircraft 20 that may utilize embodiments of the present disclosure. The aircraft 20 includes a fuselage 22 and a pair of nacelles 24. Each nacelle 24 includes a fan cowl 26 configured to permit selective access to at least a portion of the interior of the nacelle 24. Each nacelle 24 includes at least one present disclosure latch assembly 28.

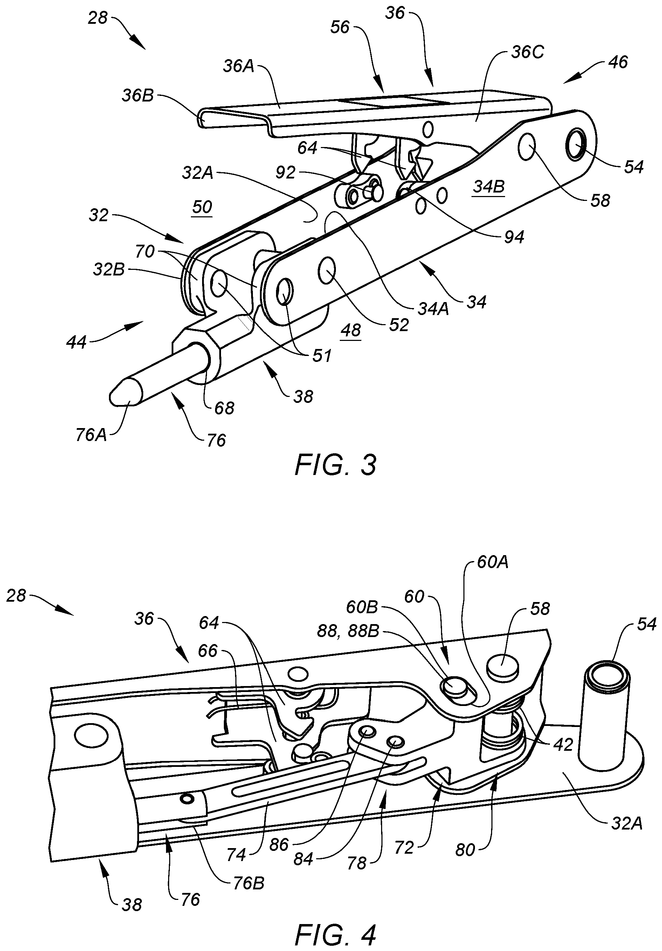

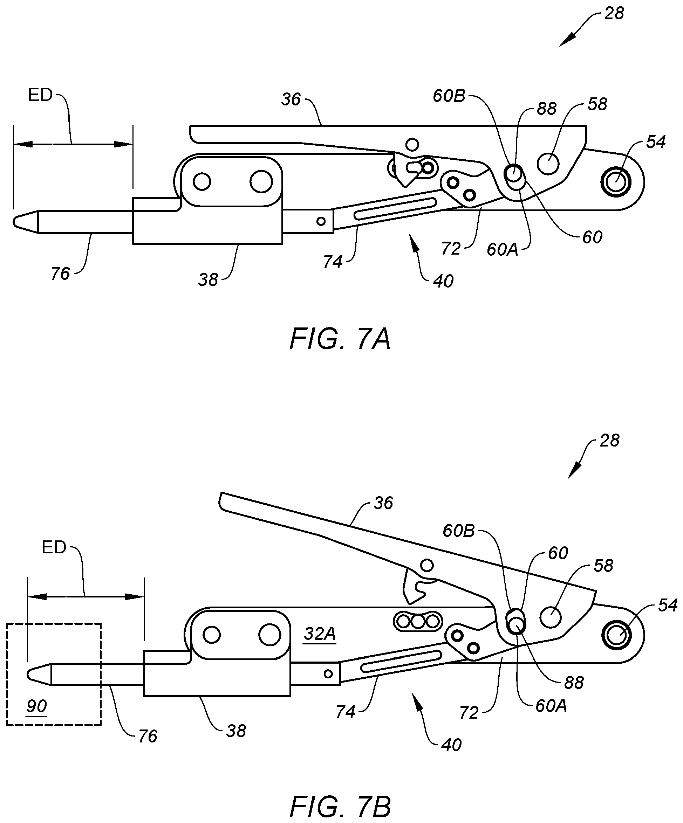

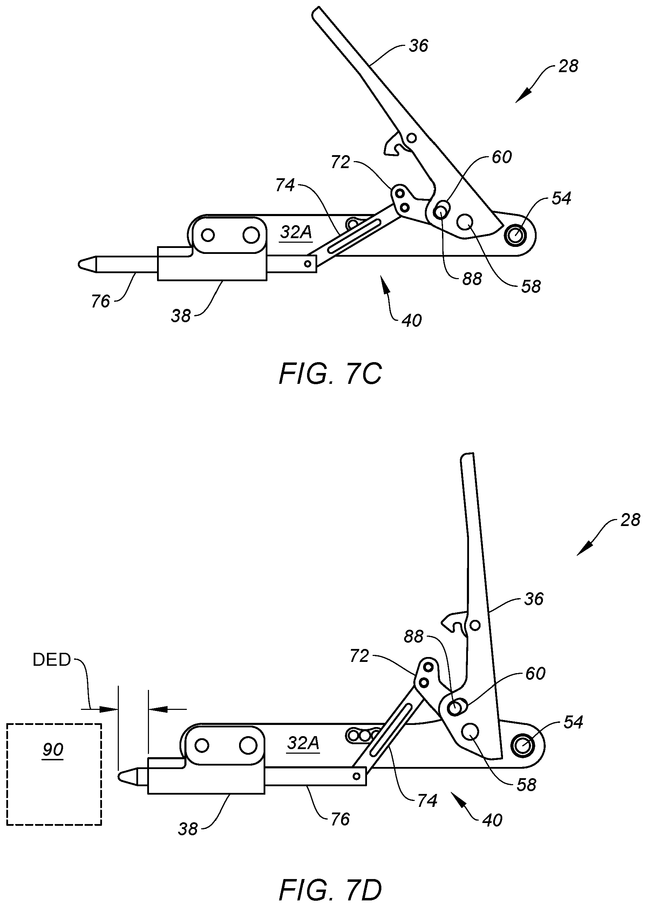

FIGS. 2 and 3 illustrate an example of a present disclosure latch assembly 28. The latch assembly 28 may be described as extending along a central axis 30. The latch assembly 28 includes a first lateral side panel 32, a second lateral side panel 34, a handle 36, a latch pin guide block 38, a latch pin linkage 40 (e.g., see FIG. 4), and a handle biasing element 42 (e.g., see FIG. 4). The latch assembly 28 extends lengthwise along the central axis 30 between a proximal end 44 and a distal end 46, widthwise between the first and second lateral side panels 32, 34, and height wise between a bottom side 48 and a handle side 50. To facilitate the description herein, orthogonal axes X, Y, and Z are shown in FIG. 2. The latch assembly 28 length extends in the X-axis direction. The latch assembly 28 width extends in the Y-axis direction. The latch assembly 28 height extends in the Z-axis direction. The terms "proximal" and "distal" are used herein solely to facilitate the description and are not intended to imply any latch assembly 28 orientation. FIG. 2 is a perspective view of the latch assembly 28 in a handle closed configuration. FIG. 3 is a perspective view of the latch assembly 28 in a handle open configuration. As will be detailed herein, the handle 36 is pivotal and the latch assembly 28 may be disposed in a plurality of handle open configurations as shown in FIGS. 7B-7D, including the handle fully open configuration shown in FIG. 7D. FIGS. 4, 6, and 7A-7D diagrammatically illustrate the latch assembly 28 with the second lateral side panel 34 removed to facilitate description of latch assembly 28 components.

Referring to FIGS. 2 and 3, the first lateral side panel 32 extends lengthwise between a proximal end and a distal end and includes an inner surface 32A and an outer surface 32B. The second lateral side panel 34 extends lengthwise between a proximal end and a distal end and includes an inner surface 34A and an outer surface 34B. In the embodiment shown in FIGS. 2 and 3, the first and second lateral side panels 32, 34 are uniformly spaced apart from one another along their lengths, and are therefore parallel one another. In this embodiment, a proximal end pin 52 extends between the first and second lateral side panels 32, 34 adjacent the proximal end 44 of the latch assembly 28, and a distal end pin 54 extends between the first and second lateral side panels 32, 34 adjacent the distal end 46 of the latch assembly 28, thereby connecting the first and second lateral side panels 32, 34 to one another. The first and second lateral side panels 32, 34 include apertures 51 to receive a fastener configured to mount the latch assembly 28.

Referring to FIGS. 2-4, the handle 36 includes a topside panel 36A, a first handle lateral side panel 36B, a second handle lateral side panel 36C, and a handle latch mechanism 56. The first handle lateral side panel 36B is disposed on a first lateral side of the topside panel 36A and the second handle lateral side panel 36C is disposed on a second lateral side of the topside panel 36A, opposite the first lateral side. Both the first and second handle lateral side panels 36B, 36C extend outwardly from the topside panel 36A and extend lengthwise between a proximal end and a distal end. In the embodiment shown in FIGS. 2-4 the handle first and second lateral side panels 36B, 36C are perpendicular to the topside panel 36A and are parallel one another. Both of the first and second handle lateral side panels 36B, 36C include a pivot pin aperture disposed adjacent to the distal end of the respective handle lateral side panel 36B, 36C for receiving a handle pivot axle 58. Both of the first and second handle lateral side panels 36B, 36C include a drive link post aperture 60 for receiving a respective drive link post 88A, 88B. The drive link post apertures 60 are aligned with one another. Each respective drive link post aperture 60 is configured to allow travel of a respective drive link post 88A, 88B within the aforesaid drive link post aperture 60. In the embodiment shown in FIG. 4, the drive link post apertures 60 are configured as slots (e.g., having a slot length greater than its width) that extend in a straight line between a first end 60A and a second end 60B. In those embodiments wherein the drive link post apertures 60 are configured as slots, they are not required to be straight line slots; e.g., the slot may extend arcuately in the lengthwise direction between the first and second ends. The drive link post apertures 60 are disposed on a side of the handle pivot axle 58 apertures opposite the distal end of the handle 36. The present disclosure is not limited to this handle 36 configuration.

The handle latch mechanism 56 is disposed in the handle topside panel 36A and includes a lever 62 and a pair of hook latches 64 attached to the lever 62. The lever 62 and the attached hook latches 64 are pivotally mounted to the handle 36. The lever 62 and hook latches 64 may be disposed in a latched orientation wherein the lever 62 is flush with the top side panel 36A of the handle 36 and the hook latches 64 are in a latched position, and the lever 62 and hook latches 64 may be disposed in an unlatched orientation (not shown) wherein the lever 62 is pivoted away from the topside panel 36A of the handle 36 and the hook latches 64 are rotated into an unlatched position. In some embodiments, the handle latch mechanism 56 may include a biasing element (e.g., a spring 66 - see FIG. 4) that biases the lever 62 in the latched orientation. The handle latch mechanism 56 described above and shown in the FIGURES is an example of a handle latch mechanism and the present disclosure is not limited thereto.

Referring to FIGS. 2 and 3, the latch pin guide block 38 includes a cylindrical body having an inner bore 68 and a pair of attachment flanges 70. The inner bore 68 extends through the cylindrical body in a lengthwise direction. The attachment flanges 70 include apertures for receiving the proximal end pin 52 extending between the first and second lateral side panels 32, 34, and apertures for receiving the fastener configured to mount the latch assembly 28. In an assembled latch assembly 28, the attachment flanges 70 are disposed between the inner surfaces 32A, 34A of the latch assembly first and second lateral side panels 32, 34 and the proximal end pin 52 extends through the attachment flanges 70.

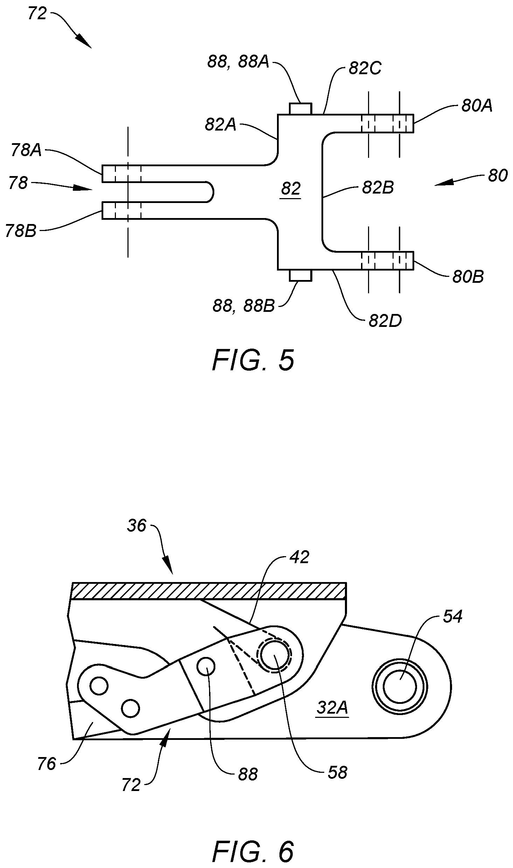

Referring to FIGS. 4 and 5, the latch pin linkage 40 includes a drive link 72, a drag link 74, and a latch pin 76. The drive link 72 includes a drag link clevis 78, a pivot axle clevis 80, a central body 82, and at least two drive link posts. The central body 82 has a first lengthwise side 82A, a second lengthwise side 82B, a first lateral side 82C, and a second lateral side 82D. The first lengthwise side 82A is opposite the second lengthwise side 82B, and the first lateral side 82C is opposite the second lateral side 82D. The first and second lengthwise sides 82A, 82B may be orthogonal to the first and second lateral sides 82C, 82D. The drag link clevis 78 extends out from the first lengthwise side 82A of the central body 82 and the pivot axle clevis 80 extends out from the second lengthwise side 82B of the central body 82. The drag link clevis 78 includes a pair of parallel flanges 78A, 78B separated from one another by a center slot. The center slot is configured to receive a portion of the drag link 74. Each drag link clevis flange 78A, 78B includes an aperture for receiving a drag link pivot axle 84 and an aperture for receiving an over-center pin 86. The drag link pivot axle 84 extends between the drag link clevis flanges 78A, 78B and through the drag link clevis center slot. The over-center pin 86 extends between the drag link clevis flanges 78A, 78B and through the drag link clevis center slot. The pivot axle clevis 80 includes a pair of parallel flanges 80A, 80B separated from one another. Each pivot axle clevis flange 80A, 80B includes an aperture for receiving the handle pivot axle 58. The drive link post embodiment shown in FIG. 6 includes a pair of drive link posts 88A, 88B; e.g., a first drive link post 88A extending out from the first lateral side 82C of the central body 82 and a second drive link post 88B extending out from the second lateral side 82D of the central body 82.

The drag link 74 extends lengthwise between a proximal end and a distal end. The proximal end of the drag link 74 is pivotally attached to a distal end of the latch pin 76. The distal end of the drag link 74 is pivotally attached to drag link clevis 78.

The latch pin 76 extends lengthwise between an engagement end 76A and a distal end 76B. The latch pin 76 embodiment shown in FIGS. 2 and 3 has a circular cross-sectional geometry, but the latch pin 76 is not limited thereto. The engagement end 76A of the latch pin 76 is configured for engagement with a mating element 90 (diagrammatically shown) located, for example in an adjacent nacelle surface. The present disclosure is not limited to use with any particular mating element 90. In some embodiments, the engagement end 76A of the latch pin 76 may be configured to facilitate engagement between the latch pin 76 and the mating element 90. For example, the engagement end 76A of the latch pin 76 shown in FIGS. 2 and 3 is tapered to facilitate engagement. The present disclosure is not limited to any particular engagement end 76A geometry.

Referring to FIGS. 4 and 6, the handle biasing element 42 is configured to bias the handle 36 toward a handle open configuration; e.g., bias the handle 36 to rotate about the handle pivot axle 58 away from the first and second lateral side panels 32, 34. The handle biasing element 42 may include a single element (shown diagrammatically in FIG. 6) or more than one element (FIG. 4 illustrates a pair of handle biasing elements). A non-limiting example of a handle biasing element 42 is a torsion spring. The torsion spring coil may be mounted on the handle pivot axle 58 with a first leg of the torsion spring acting on the handle 36 and a second leg of the torsion spring acting on drive link 72. The present disclosure is not limited to any particular handle biasing element 42 configuration.

In the embodiment shown in FIG. 3, the latch assembly 28 includes a first hook latch post 92 attached to the inner surface 32A of the first lateral side panel 32 and a second hook latch post 94 attached to the inner surface 34A of the second lateral side panel 34. The first and second hook latch posts 92, 94 are configured for engagement with the hook latches 64 of the handle latch mechanism 56.

FIG. 7A diagrammatically illustrates the latch assembly 28 in a handle closed configuration and FIGS. 7B-7D diagrammatically illustrate the latch assembly 28 in a plurality of handle open configurations.

In the handle closed configuration (as shown in FIG. 7A), the handle 36 is latched to the hook latch posts 92, 94 via the hook latches 64 and the latch pin 76 is disposed in an engaged configuration. In the engaged configuration, the latch pin 76 is extended out from the latch assembly 28 an engaged distance ("ED") for engagement with a mating element 90 disposed in or attached to another nacelle element. In the handle closed configuration, each drive link post 88A, 88B is received within a respective handle drive link post aperture 60 and is disposed at one end of the handle drive link post aperture 60. In those embodiments wherein the handle drive link post aperture 60 is configured as a slot, the drive link posts 88A, 88B are disposed at the first end 60A of the slots when the latch assembly 28 is configured in the handle closed configuration, and the drive link posts 88A, 88B are disposed at the second end 60B of the slots when the latch assembly 28 is configured in a handle open configuration. In the handle closed configuration, the over-center pin 86 is disposed above the drag link 74 and limits the rotation of the drive link 72 and drag link 74; e.g., prevents further rotation of the drive link 72 and drag link 74 in a counterclockwise direction as shown in FIG. 7A.

FIG. 7B illustrates the handle 36 in a first handle open configuration. In this configuration, the handle latch assembly 28 has been actuated to release the hook latches 64 from the hook latch posts 92, 94. The handle biasing element 42 acting against the handle 36 causes the handle 36 to rotate away from the latch assembly 28 (i.e., in a clockwise direction in FIG. 7B). In the first handle open configuration, the drive link posts 88A, 88B remain received within the handle drive link post apertures 60 but are now disposed at the opposite end of the handle drive link post aperture 60 as a result of the handle 36 rotating away from the latch assembly 28. The length of post 88A, 88B travel permissible within the handle drive link apertures 60 defines the amount of handle 36 rotation as a result of the handle biasing element 42; i.e., "biased handle travel". The amount of biased handle travel may be selected to ensure an operator can easily grasp the handle 36 in the first handle open configuration. In the first handle open configuration, the latch pin linkage 40 (e.g., the latch pin 76) has not moved laterally from the engaged position; i.e., the latch pin 76 remains at the ED distance.

FIG. 7C illustrates the handle 36 in a second handle open configuration and FIG. 7D illustrates the handle 36 in a third handle open configuration (i.e., the handle fully open configuration). In these open configurations, the handle biasing element 42 continues to act against the handle 36 but does not cause the handle 36 to rotate. Rotation from the first handle open configuration to the second or third handle open configurations is accomplished by an operator rotating the handle 36; e.g., in a clockwise direction as shown in FIGS. 7C and 7D.

Referring to FIG. 7C, rotation of the handle 36 engages the drive link posts 88A, 88B and thereby causes the drive link 72 to rotate; e.g., in a clockwise direction as shown in FIG. 7C. The rotation of the drive link 72, in turn, translates the drag link 74 upward and toward the distal end 46 of the latch assembly 28. During the translation, the drag link 74 pivots relative to the drive link 72 and pivots relative to the latch pin 76. The translation of the drag link 74 causes linear translation of the latch pin 76; i.e., the latch pin 76 retracts and now extends out from the latch assembly 28 a distance less than the engaged distance ("ED").

Referring to FIG. 7D, further rotation of the handle 36 causes the drive link posts 88A, 88B to rotate the drive link 72 further; e.g., in a clockwise direction as shown in FIG. 7D. FIG. 7D shows the handle 36 in a handle fully open configuration. The rotation of the drive link 72, in turn, translates the drag link 74 upward and toward the distal end 46 of the latch assembly 28. During the translation, the drag link 74 pivots relative to the drive link 72 and pivots relative to the latch pin 76. The translation of the drag link 74 causes linear translation of the latch pin 76; i.e., the latch pin 76 retracts and now extends out from the latch assembly 28 a disengaged distance ("DED"). When the latch pin 76 extends out from the latch assembly 28 the disengaged distance ("DED"), the latch pin 76 is no longer engaged with the mating element 90 (shown diagrammatically) and the fan cowl (or other structure to which the latch assembly 28 is in communication) is now free to be opened. In the third handle open configuration (i.e., the handle fully open configuration), the drive link 72 and the drag link 74 may be configured such that the drive link 72 engages with the drag link 74 to prevent further rotation of the latch assembly 28 components; i.e., prevent further rotation of the latch assembly 28 component in a clockwise direction as shown in FIG. 7D.

To close and latch the fan cowl (or other structure to which the latch assembly 28 is in communication), the opposite process is performed. The fan cowl is rotated into a closed position and the latch assembly 28 handle 36 is rotated towards the latch assembly 28; i.e., the counterclockwise direction as shown in FIGS. 7A-7D. Once the latch pin 76 is translated into engagement with the mating element 90, the fan cowl is latched. The handle 36 can be returned to the handle closed configuration (as shown in FIG. 7A) by pushing the handle 36 towards the latch assembly 28 until the hook latches 64 are engaged with the hook latch posts 92, 94.

The terms "substantially", "generally" and/or "about" as contemplated herein are used with the appreciation that small variations in dimensions are within the present disclosure. Such small variations can include variations due to manufacturing tolerances and/or expansion/contraction of parts subjected to varying conditions (e.g., pressure, force, temperature, etc.).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A latch assembly (28), comprising:
a first lateral side panel (32) and a second lateral side panel (34), wherein the first lateral side panel (32) and the second lateral side panel (34) extend lengthwise between a proximal end (44) of the latch assembly (28) and a distal end (46) of the latch assembly (28);
a handle (36) pivotally attached to the first lateral side panel (32) and the second lateral side panel (34) for rotation about a handle pivot axle (58), the handle (36) including a first drive link post aperture (60) and a second drive link post aperture (60), the first drive link post aperture (60) and the second drive link post aperture (60) are aligned with one another;
a latch pin linkage (40) that includes a drive link (72), a drag link (74), and a latch pin (76);
the drive link (72) has a central body (82) with a first lengthwise side (82A) and a second lengthwise side (82B), wherein the first lengthwise side (82A) is opposite the second lengthwise side (82B), and a first lateral side (82C) and a second lateral side (82D), wherein the first lateral side (82C) is opposite the second lateral side (82D), and the first lengthwise side (82A) and the second lengthwise side (82B) are orthogonal to the first lateral side (82C) and the second lateral side (82D);
wherein the drag link (74) has proximal end and a distal end, and the proximal end of the drag link is pivotally attached to the latch pin (76);
a latch pin guide block (38) disposed between the first lateral side panel (32) and the second lateral side panel (34) at the proximal end (44) of the latch assembly (28), the latch pin guide block (38) having an inner bore (68) configured to receive the latch pin (76); and
a handle biasing element (42) configured to bias the handle (36) to rotate about the handle pivot axle (58) away from the first lateral side panel (32) and the second lateral side panel (34);
**characterised in that**:
the drive link (72) further includes a drag link clevis (78) extending out from the first lengthwise side (82A) of the central body (82), a pivot axle clevis (80) extending out from the second lengthwise side (82B) of the central body (82), the pivot axle clevis (80) rotatably connected to the handle pivot axle (58), a first drive link post (88A) extending out from the central body first lateral side (82C) and a second drive link post (88B) extending out from the central body second lateral side (82D), wherein the first drive link post (88A) is received within the first drive link post aperture (60) and the second drive link post (88B) is received within the second drive link post aperture (60); and
the distal end of the drag link is pivotally attached to the drag link clevis (78).

2. The latch assembly (28) of claim 1, wherein the latch assembly (28) is configured for the handle (36) to rotate between a handle closed configuration and a handle fully open configuration;
wherein the drive link (72) is configured to stop rotation of the latch pin linkage (40) in a first rotational direction beyond the handle closed configuration and to stop rotation of the latch pin linkage (40) in a second rotational direction beyond the handle fully open configuration, wherein the first rotational direction is opposite the second rotational direction.

3. The latch assembly (28) of claim 2, wherein the drive link (72) includes an over-center pin (86) engaged with the drag link clevis (78) and the over-center pin (86) is disposed to contact the drag link (74) to stop the rotation of the latch pin linkage (40) in the first rotational direction beyond the handle closed configuration.

4. The latch assembly (28) of claim 2 or 3, wherein the drive link (72) is configured to contact the drag link (74) to stop the rotation of the latch pin linkage (40) in the second rotational direction beyond the handle fully open configuration.

5. The latch assembly (28) of any preceding claim, wherein the handle (36) includes a topside panel (36A), a first handle lateral side panel (36B), and a second handle lateral side panel (36C), wherein the first handle lateral side panel (36B) and the second handle lateral side panel (36C) extend outwardly from the topside panel (36A) such that the first handle lateral side panel (36B), the second handle lateral side panel (36C), and the topside panel (36A) collectively forming a U-shape;
wherein the first drive link post aperture (60) is disposed in the first handle lateral side panel (36B), and the second drive link post aperture (60) is disposed in the second handle lateral side panel (36C).

6. The latch assembly (28) of claim 5, wherein the first drive link post aperture (60) is configured as a first drive link post slot, and the second drive link post aperture (60) is configured as a second drive link post slot; and
wherein the first drive link post slot and the second drive link post slot each have a slot length that is greater than a slot width, and the slot length extends between a slot first end (60A) and a slot second end (60B).

7. The latch assembly (28) of claim 6, wherein each slot length extends along a straight line.

8. The latch assembly (28) of claim 6 or 7, wherein the latch assembly (28) is configured to rotate between a handle closed configuration and a plurality of handle open configurations; and
wherein in the handle closed configuration the first drive link post (88A) is disposed at the slot first end (60A) of the first drive link post slot, and the second drive link post (88B) is disposed at the slot first end (60A) of the second drive link post slot; and
wherein in the plurality of handle open configurations, the first drive link post (88A) is disposed at the slot second end (60B) of the first drive link post slot, and the second drive link post (88B) is disposed at the slot second end (60B) of the second drive link post slot.

9. The latch assembly (28) of any preceding claim, wherein the latch pin guide block (38) includes a pair of attachment flanges (70); and
wherein the latch assembly (28) further includes a proximal end pin (52) that is engaged with the first lateral side panel (32) and the second lateral side panel (34), and the proximal end pin (52) extends through the attachment flanges (70).

10. The latch assembly (28) of claim 9, wherein the latch pin guide block attachment flanges (70), the first lateral side panel (32), and the second lateral side panel (34) include aligned fastener apertures (51) configured to receive a latch assembly mounting fastener, the fastener apertures (51) disposed between the distal end (46) of the latch assembly (28) and the proximal end pin (52).

11. The latch assembly (28) of any preceding claim, wherein:
the handle biasing element (42) is configured to act against the handle (36) and to act against the drive link (72).

12. The latch assembly (28) of any preceding claim, wherein:
the handle biasing element (42) is a torsional spring (66).

13. The latch assembly (28) of any preceding claim, wherein the handle (36) includes a handle latch mechanism (56) configured to bias the handle latch mechanism (56) in a latched orientation.

## Patentansprüche

1. Eine Verriegelungsanordnung (28), umfassend:
eine erste Seitenwand (32) und eine zweite Seitenwand (34), wobei sich die erste Seitenwand (32) und die zweite Seitenwand (34) längs zwischen einem proximalen Ende (44) der Verriegelungsanordnung (28) und einem distalen Ende (46) der Verriegelungsanordnung (28) erstrecken;
einen Griff (36), der schwenkbar an der ersten Seitenwand (32) und der zweiten Seitenwand (34) zur Drehung um eine Griffschwenkachse (58) angebracht ist, wobei der Griff (36) eine erste Antriebsverbindungsstift-Öffnung (60) und eine zweite Antriebsverbindungsstift-Öffnung (60) aufweist, wobei die erste Antriebsverbindungsstift-Öffnung (60) und die zweite Antriebsverbindungsstift-Öffnung (60) miteinander ausgerichtet sind;
eine Verriegelungsstift-Verbindung (40), die ein Antriebsglied (72), ein Schleppglied (74) und einen Verriegelungsstift (76) umfasst;
wobei das Antriebsglied (72) einen zentralen Körper (82) mit einer ersten Längsseite (82A) und einer zweiten Längsseite (82B) aufweist, wobei die erste Längsseite (82A) der zweiten Längsseite (82B) gegenüberliegt, und einer ersten Seitenseite (82C) und einer zweiten Seitenseite (82D), wobei die erste Seitenseite (82C) der zweiten Seitenseite (82D) gegenüberliegt, und die erste Längsseite (82A) und die zweite Längsseite (82B) orthogonal zu der ersten Seitenseite (82C) und der zweiten Seitenseite (82D) sind;
wobei das Schleppglied (74) ein proximales Ende und ein distales Ende aufweist, und das proximale Ende des Schleppglieds schwenkbar an dem Verriegelungsstift (76) angebracht ist;
einen Verriegelungsstift-Führungsblock (38), der zwischen der ersten Seitenwand (32) und der zweiten Seitenwand (34) an dem proximalen Ende (44) der Verriegelungsanordnung (28) angeordnet ist, wobei der Verriegelungsstift-Führungsblock (38) eine Innenbohrung (68) aufweist, die zur Aufnahme des Verriegelungsstifts (76) ausgebildet ist; und
ein Griffvorspannelement (42), das dazu ausgebildet ist, den Griff (36) zur Drehung um die Griffschwenkachse (58) von der ersten Seitenwand (32) und der zweiten Seitenwand (34) weg vorzuspannen;
**dadurch gekennzeichnet, dass**:
das Antriebsglied (72) ferner ein Schleppgliedgabelstück (78) umfasst, das sich von der ersten Längsseite (82A) des zentralen Körpers (82) aus erstreckt, ein Schwenkachsgabelstück (80), das sich von der zweiten Längsseite (82B) des zentralen Körpers (82) aus erstreckt, wobei das Schwenkachsgabelstück (80) drehbar mit der Griffschwenkachse (58) verbunden ist, einen ersten Antriebsverbindungspfosten (88A), der sich von der ersten Seitenseite (82C) des zentralen Körpers aus erstreckt, und einen zweiten Antriebsverbindungspfosten (88B), der sich von der zweiten Seitenseite (82D) des zentralen Körpers aus erstreckt, wobei der erste Antriebsverbindungspfosten (88A) in der ersten Antriebsverbindungsstift-Öffnung (60) aufgenommen ist und der zweite Antriebsverbindungspfosten (88B) in der zweiten Antriebsverbindungsstift-Öffnung (60) aufgenommen ist; und
das distale Ende des Schleppglieds schwenkbar an dem Schleppgliedgabelstück (78) angebracht ist.

2. Die Verriegelungsanordnung (28) nach Anspruch 1, wobei die Verriegelungsanordnung (28) dazu ausgebildet ist, dass sich der Griff (36) zwischen einer geschlossenen Griffkonfiguration und einer vollständig geöffneten Griffkonfiguration drehen kann;
wobei das Antriebsglied (72) dazu ausgebildet ist, die Drehung der Verriegelungsstift-Verbindung (40) in einer ersten Drehrichtung über die geschlossene Griffkonfiguration hinaus zu stoppen und die Drehung der Verriegelungsstift-Verbindung (40) in einer zweiten Drehrichtung über die vollständig geöffnete Griffkonfiguration hinaus zu stoppen, wobei die erste Drehrichtung der zweiten Drehrichtung entgegengesetzt ist.

3. Die Verriegelungsanordnung (28) nach Anspruch 2, wobei das Antriebsglied (72) einen Übertotpunktstift (86) umfasst, der mit dem Schleppgliedgabelstück (78) in Eingriff steht, und der Übertotpunktstift (86) dazu angeordnet ist, das Schleppglied (74) zu berühren, um die Drehung der Verriegelungsstift-Verbindung (40) in der ersten Drehrichtung über die geschlossene Griffkonfiguration hinaus zu stoppen.

4. Die Verriegelungsanordnung (28) nach Anspruch 2 oder 3, wobei das Antriebsglied (72) dazu ausgebildet ist, das Schleppglied (74) zu berühren, um die Drehung der Verriegelungsstift-Verbindung (40) in der zweiten Drehrichtung über die vollständig geöffnete Griffkonfiguration hinaus zu stoppen.

5. Die Verriegelungsanordnung (28) nach einem der vorstehenden Ansprüche, wobei der Griff (36) eine Oberseitenplatte (36A), eine erste Griffseitenplatte (36B) und eine zweite Griffseitenplatte (36C) umfasst, wobei sich die erste Griffseitenplatte (36B) und die zweite Griffseitenplatte (36C) von der Oberseitenplatte (36A) nach außen erstrecken, so dass die erste Griffseitenplatte (36B), die zweite Griffseitenplatte (36C) und die Oberseitenplatte (36A) zusammen eine U-Form bilden;
wobei die erste Antriebsverbindungsstift-Öffnung (60) in der ersten Griffseitenplatte (36B) angeordnet ist, und die zweite Antriebsverbindungsstift-Öffnung (60) in der zweiten Griffseitenplatte (36C) angeordnet ist.

6. Die Verriegelungsanordnung (28) nach Anspruch 5, wobei die erste Antriebsverbindungsstift-Öffnung (60) als ein erster Antriebsverbindungspfosten-Schlitz ausgebildet ist, und die zweite Antriebsverbindungsstift-Öffnung (60) als ein zweiter Antriebsverbindungspfosten-Schlitz ausgebildet ist; und
wobei der erste Antriebsverbindungspfosten-Schlitz und der zweite Antriebsverbindungspfosten-Schlitz jeweils eine Schlitzlänge aufweisen, die größer ist als eine Schlitzbreite, und sich die Schlitzlänge zwischen einem ersten Schlitzende (60A) und einem zweiten Schlitzende (60B) erstreckt.

7. Die Verriegelungsanordnung (28) nach Anspruch 6, wobei sich jede Schlitzlänge entlang einer geraden Linie erstreckt.

8. Die Verriegelungsanordnung (28) nach Anspruch 6 oder 7, wobei die Verriegelungsanordnung (28) dazu ausgebildet ist, sich zwischen einer geschlossenen Griffkonfiguration und einer Vielzahl von geöffneten Griffkonfigurationen zu drehen; und
wobei in der geschlossenen Griffkonfiguration der erste Antriebsverbindungspfosten (88A) an dem ersten Schlitzende (60A) des ersten Antriebsverbindungspfosten-Schlitzes angeordnet ist, und der zweite Antriebsverbindungspfosten (88B) an dem ersten Schlitzende (60A) des zweiten Antriebsverbindungspfosten-Schlitzes angeordnet ist; und
wobei in der Vielzahl der geöffneten Griffkonfigurationen der erste Antriebsverbindungspfosten (88A) an dem zweiten Schlitzende (60B) des ersten Antriebsverbindungspfosten-Schlitzes angeordnet ist, und der zweite Antriebsverbindungspfosten (88B) an dem zweiten Schlitzende (60B) des zweiten Antriebsverbindungspfosten-Schlitzes angeordnet ist.

9. Die Verriegelungsanordnung (28) nach einem der vorstehenden Ansprüche, wobei der Verriegelungsstift-Führungsblock (38) ein Paar Befestigungsflansche (70) umfasst; und
wobei die Verriegelungsanordnung (28) ferner einen proximalen Endstift (52) umfasst, der mit der ersten Seitenwand (32) und der zweiten Seitenwand (34) in Eingriff steht, und sich der proximale Endstift (52) durch die Befestigungsflansche (70) erstreckt.

10. Die Verriegelungsanordnung (28) nach Anspruch 9, wobei die Befestigungsflansche (70) des Verriegelungsstift-Führungsblocks, die erste Seitenwand (32) und die zweite Seitenwand (34) miteinander ausgerichtete Befestigungsöffnungen (51) umfassen, die zur Aufnahme eines Verriegelungsanordnungs-Montagebefestigungselements ausgebildet sind, wobei die Befestigungsöffnungen (51) zwischen dem distalen Ende (46) der Verriegelungsanordnung (28) und dem proximalen Endstift (52) angeordnet sind.

11. Die Verriegelungsanordnung (28) nach einem der vorstehenden Ansprüche, wobei:
das Griffvorspannelement (42) dazu ausgebildet ist, gegen den Griff (36) und gegen das Antriebsglied (72) zu wirken.

12. Die Verriegelungsanordnung (28) nach einem der vorstehenden Ansprüche, wobei:
das Griffvorspannelement (42) eine Drehfeder (66) ist.

13. Die Verriegelungsanordnung (28) nach einem der vorstehenden Ansprüche, wobei der Griff (36) einen Griffverriegelungsmechanismus (56) umfasst, der dazu ausgebildet ist, den Griffverriegelungsmechanismus (56) in eine verriegelte Ausrichtung vorzuspannen.

## Revendications

1. Un ensemble de verrouillage (28), comprenant :
un premier panneau latéral (32) et un second panneau latéral (34), dans lequel le premier panneau latéral (32) et le second panneau latéral (34) s'étendent longitudinalement entre une extrémité proximale (44) de l'ensemble de verrouillage (28) et une extrémité distale (46) de l'ensemble de verrouillage (28) ;
une poignée (36) fixée de manière pivotante au premier panneau latéral (32) et au second panneau latéral (34) pour une rotation autour d'un axe de pivotement de poignée (58), la poignée (36) comprenant une première ouverture de tenon de tringle d'entraînement (60) et une seconde ouverture de tenon de tringle d'entraînement (60), la première ouverture de tenon de tringle d'entraînement (60) et la seconde ouverture de tenon de tringle d'entraînement (60) étant alignées l'une avec l'autre ;
une liaison de goupille de verrouillage (40) qui comprend une tringle d'entraînement (72), une tringle de traînée (74) et une goupille de verrouillage (76) ;
la tringle d'entraînement (72) présente un corps central (82) avec un premier côté longitudinal (82A) et un second côté longitudinal (82B), dans lequel le premier côté longitudinal (82A) est opposé au second côté longitudinal (82B), et un premier côté latéral (82C) et un second côté latéral (82D), dans lequel le premier côté latéral (82C) est opposé au second côté latéral (82D), et le premier côté longitudinal (82A) et le second côté longitudinal (82B) sont orthogonaux au premier côté latéral (82C) et au second côté latéral (82D) ;
dans lequel la tringle de traînée (74) présente une extrémité proximale et une extrémité distale, et l'extrémité proximale de la tringle de traînée est fixée de manière pivotante à la goupille de verrouillage (76) ;
un bloc de guidage de goupille de verrouillage (38) disposé entre le premier panneau latéral (32) et le second panneau latéral (34) au niveau de l'extrémité proximale (44) de l'ensemble de verrouillage (28), le bloc de guidage de goupille de verrouillage (38) présentant un alésage interne (68) configuré pour recevoir la goupille de verrouillage (76) ; et
un élément de rappel de poignée (42) configuré pour rappeler la poignée (36) afin qu'elle tourne autour de l'axe de pivotement de poignée (58) en s'écartant du premier panneau latéral (32) et du second panneau latéral (34) ;
**caractérisé en ce que** :
la tringle d'entraînement (72) comprend en outre une chape de tringle de traînée (78) s'étendant à partir du premier côté longitudinal (82A) du corps central (82), une chape d'axe de pivotement (80) s'étendant à partir du second côté longitudinal (82B) du corps central (82), la chape d'axe de pivotement (80) étant raccordée de manière rotative à l'axe de pivotement de poignée (58), un premier tenon de tringle d'entraînement (88A) s'étendant à partir du premier côté latéral (82C) du corps central et un second tenon de tringle d'entraînement (88B) s'étendant à partir du second côté latéral (82D) du corps central, dans lequel le premier tenon de tringle d'entraînement (88A) est reçu à l'intérieur de la première ouverture de tenon de tringle d'entraînement (60) et le second tenon de tringle d'entraînement (88B) est reçu à l'intérieur de la seconde ouverture de tenon de tringle d'entraînement (60) ; et
l'extrémité distale de la tringle de traînée est fixée de manière pivotante à la chape de tringle de traînée (78).

2. L'ensemble de verrouillage (28) de la revendication 1, dans lequel l'ensemble de verrouillage (28) est configuré pour que la poignée (36) tourne entre une configuration de poignée fermée et une configuration de poignée entièrement ouverte ;
dans lequel la tringle d'entraînement (72) est configurée pour arrêter la rotation de la liaison de goupille de verrouillage (40) dans un premier sens de rotation au-delà de la configuration de poignée fermée et pour arrêter la rotation de la liaison de goupille de verrouillage (40) dans un second sens de rotation au-delà de la configuration de poignée entièrement ouverte, dans lequel le premier sens de rotation est opposé au second sens de rotation.

3. L'ensemble de verrouillage (28) de la revendication 2, dans lequel la tringle d'entraînement (72) comprend une goupille de dépassement de centre (86) en prise avec la chape de tringle de traînée (78) et la goupille de dépassement de centre (86) est disposée pour entrer en contact avec la tringle de traînée (74) afin d'arrêter la rotation de la liaison de goupille de verrouillage (40) dans le premier sens de rotation au-delà de la configuration de poignée fermée.

4. L'ensemble de verrouillage (28) de la revendication 2 ou 3, dans lequel la tringle d'entraînement (72) est configurée pour entrer en contact avec la tringle de traînée (74) afin d'arrêter la rotation de la liaison de goupille de verrouillage (40) dans le second sens de rotation au-delà de la configuration de poignée entièrement ouverte.

5. L'ensemble de verrouillage (28) de l'une quelconque des revendications précédentes, dans lequel la poignée (36) comprend un panneau supérieur (36A), un premier panneau latéral de poignée (36B) et un second panneau latéral de poignée (36C), dans lequel le premier panneau latéral de poignée (36B) et le second panneau latéral de poignée (36C) s'étendent vers l'extérieur à partir du panneau supérieur (36A) de sorte que le premier panneau latéral de poignée (36B), le second panneau latéral de poignée (36C) et le panneau supérieur (36A) forment collectivement une forme en U ;
dans lequel la première ouverture de tenon de tringle d'entraînement (60) est disposée dans le premier panneau latéral de poignée (36B), et la seconde ouverture de tenon de tringle d'entraînement (60) est disposée dans le second panneau latéral de poignée (36C).

6. L'ensemble de verrouillage (28) de la revendication 5, dans lequel la première ouverture de tenon de tringle d'entraînement (60) est configurée sous forme d'une première fente de tenon de tringle d'entraînement, et la seconde ouverture de tenon de tringle d'entraînement (60) est configurée sous forme d'une seconde fente de tenon de tringle d'entraînement ; et
dans lequel la première fente de tenon de tringle d'entraînement et la seconde fente de tenon de tringle d'entraînement présentent chacune une longueur de fente supérieure à une largeur de fente, et la longueur de fente s'étend entre une première extrémité de fente (60A) et une seconde extrémité de fente (60B).

7. L'ensemble de verrouillage (28) de la revendication 6, dans lequel chaque longueur de fente s'étend le long d'une ligne droite.

8. L'ensemble de verrouillage (28) de la revendication 6 ou 7, dans lequel l'ensemble de verrouillage (28) est configuré pour tourner entre une configuration de poignée fermée et une pluralité de configurations de poignée ouverte ; et
dans lequel, dans la configuration de poignée fermée, le premier tenon de tringle d'entraînement (88A) est disposé au niveau de la première extrémité de fente (60A) de la première fente de tenon de tringle d'entraînement, et le second tenon de tringle d'entraînement (88B) est disposé au niveau de la première extrémité de fente (60A) de la seconde fente de tenon de tringle d'entraînement ; et
dans lequel, dans la pluralité de configurations de poignée ouverte, le premier tenon de tringle d'entraînement (88A) est disposé au niveau de la seconde extrémité de fente (60B) de la première fente de tenon de tringle d'entraînement, et le second tenon de tringle d'entraînement (88B) est disposé au niveau de la seconde extrémité de fente (60B) de la seconde fente de tenon de tringle d'entraînement.

9. L'ensemble de verrouillage (28) de l'une quelconque des revendications précédentes, dans lequel le bloc de guidage de goupille de verrouillage (38) comprend une paire de brides de fixation (70) ; et
dans lequel l'ensemble de verrouillage (28) comprend en outre une goupille d'extrémité proximale (52) qui est en prise avec le premier panneau latéral (32) et le second panneau latéral (34), et la goupille d'extrémité proximale (52) s'étend à travers les brides de fixation (70).

10. L'ensemble de verrouillage (28) de la revendication 9, dans lequel les brides de fixation (70) du bloc de guidage de goupille de verrouillage, le premier panneau latéral (32) et le second panneau latéral (34) comprennent des ouvertures de fixation alignées (51) configurées pour recevoir une attache de montage d'ensemble de verrouillage, les ouvertures de fixation (51) étant disposées entre l'extrémité distale (46) de l'ensemble de verrouillage (28) et la goupille d'extrémité proximale (52).

11. L'ensemble de verrouillage (28) de l'une quelconque des revendications précédentes, dans lequel :
l'élément de rappel de poignée (42) est configuré pour agir contre la poignée (36) et pour agir contre la tringle d'entraînement (72).

12. L'ensemble de verrouillage (28) de l'une quelconque des revendications précédentes, dans lequel :
l'élément de rappel de poignée (42) est un ressort de torsion (66).

13. L'ensemble de verrouillage (28) de l'une quelconque des revendications précédentes, dans lequel la poignée (36) comprend un mécanisme de verrouillage de poignée (56) configuré pour rappeler le mécanisme de verrouillage de poignée (56) dans une orientation verrouillée.
